Europäisches Patentamt

European Patent Office

Office européen des brevets

(11) Veröffentlichungsnummer: **0 203 410 B1**

## EUROPÄISCHE PATENTSCHRIFT

(45) Veröffentlichungstag der Patentschrift: **15.07.92**

(21) Anmeldenummer: **86106030.9**

(22) Anmeldetag: **02.05.86**

(51) Int. Cl.5: **H02H  5/10, B64F 1/34, H01R 13/71, H02H 11/00, H01R 13/70**

(54) **Flugzeug-Stromversorgungseinrichtung.**

(30) Priorität: **02.05.85 DE 3515720**

(43) Veröffentlichungstag der Anmeldung:
**03.12.86 Patentblatt  86/49**

(45) Bekanntmachung des Hinweises auf die Patenterteilung:
**15.07.92 Patentblatt  92/29**

(84) Benannte Vertragsstaaten:
**AT BE CH FR GB IT LI LU NL SE**

(56) Entgegenhaltungen:
**EP-A- 0 202 450**
**DE-A- 2 111 593**
**DE-A- 2 450 454**

**TECHNISCHE RUNDSCHAU, Band 69, Nr. 5, 1. Februar 1977, Seite 13, Hallwag Verlag, Bern, CH; L. SPENGLER: "Flugzeug-Stromversorgungsanlage"**

**British Standard Aerospace Series, G219: 1975**

(73) Patentinhaber: **Manfred Fladung GmbH Heimbach 26 W-8752 Mömbris(DE)**

(72) Erfinder: **Mack, Helge Hunsrückstrasse 18 W-6072 Dreieich/Offenthal(DE)**

(74) Vertreter: **Stoffregen, Hans-Herbert, Dr. Dipl.-Phys. et al Patentanwalt, Salzstrasse 11 a, Postfach 21 44 W-6450 Hanau (Main) 1(DE)**

## Beschreibung

Die Erfindung betrifft eine Flugzeug-Stromversorgungseinrichtung gemäß dem, Oberbegriff von Anspruch 1.

Bei einer derartigen Stromversorgungseinrichtung (z.B. British Standard: Aerospace Series, G219:1975) wird die bordseitige Schwachstromquelle einerseits zur Freigabe der bodenseitigen Dauerversorgung der Starkstromanschlüsse und andererseits über eine bodenseitige Schleifenbildung, nämlich die Brücke zwischen den Schwachstromanschlüssen, für bordseitige Steuerungsaufgaben benutzt, wie für das Durchschalten eines bordseitigen Leistungsrelais. Hierdurch wird sichergestellt, daß die Starkstrombeaufschlagung nur bei intakter Steckerverbindung möglich ist. Sobald diese unterbrochen wird, entfällt auch die Starkstromversorgung des bodenseitigen Mehrfachbuchsenteils, was aus Sicherheitsgründen äußerst wichtig ist. Um beim Trennen der Steckerverbindung ein Entstehen von Lichtbögen im Bereich der Starkstromanschlüsse zu vermeiden, sind die bordseitigen Kontaktbolzen, die mit den Schwachstromanschlüssen in Eingriff treten, kürzer ausgebildet, so daß beim Trennen der Steckerverbindung zunächst die Schwachstromanschlüsse gelöst werden. Dadurch wird die Starkstrombeaufschlagung vor dem Trennen der Starkstromanschlüsse aufgehoben.

Im praktischen Betrieb hat sich gezeigt, daß vielfach eine bordseitige Schwachstromquelle fehlt oder nicht intakt ist. Um dennoch auch solche Flugzeuge versorgen zu können, ist es üblich, die geschilderten Sicherheitsmaßnahmen aufzuheben und die Starkstrombeaufschlagung unabhängig vom Zustand der Steckerverbindung vorzunehmen. Hierdurch ergeben sich erhebliche Gefahren für das Bedienungspersonal und die Anlagen. Auch bei völlig gelöster Steckerverbindung kann das Mehrfachbuchsenteil unter Spannung stehen, was zu tödlichen Unfällen, Zerstörungen und Bränden führen kann. Außerdem ergeben sich beim Trennen der unter Spannung stehenden Steckverbindung gefährliche Lichtbögen.

In der europäischen Patentanmeldung EP-A-0202450, die nach Artikel 54(3)EPÜ zum Stand der Technik gehört, ist bereits eine Bodenstromversorgung für den Anschlußstecker eines Flugzeugs vorgeschlagen worden, bei der die Prüfung auf geschlossene Steckerkontakte ohne bordseitige Schwachstromquelle durchgeführt wird. Der Anschlußstecker enthält mehrere Kontaktbolzen. Bodenseitig ist ein Mehrfachbuchsenteil vorgesehen. Neben Drehstromanschlüssen und einem gemeinsamen Nulleiter sind noch Schwachstromanschlüsse vorhanden. Eine Buchse für einen Schwachstromanschluß im bodenseitigen Mehrfachbuchsenteil ist geteilt und wirkt mit einem bordseitigen Kontaktbolzen zusammen, an den eine Gleichstromquelle angeschlossen ist. Die beiden Teile der Buchse gehören zu einem eine Wechselstromquelle und ein Relais enthaltenden Stromkreis, der über den korrespondierenden Kontaktbolzen des bordseitigen Anschlußsteckers geschlossen wird. Nur bei geschlossenem Stromkreis, d.h. bei einer Verbindung zwischen Anschlußstecker und Mehrfachbuchsenteil gibt das Relais ein weiteres Relais frei, über dessen Kontakte die Drehstromanschlüsse des Anschlußsteckers an Spannung gelegt werden können. Bei vorhandener Bordspannung zieht ein drittes Relais an und verriegelt das erstgenannte Relais, wird jedoch seinerseits nicht durch Anziehen des ersten Relais verriegelt.

Der Erfindung liegt die Aufgabe zugrunde, eine Flugzeug-Stromversorgungseinrichtungder eingangs beschriebenen Art unter Vermeidung einer Starkstrombeaufschlagung ohne Prüfung der Steckerverbindung mit einfachen Mitteln so auszubilden, daß sie unabhängig von dem Vorhandensein einer bordseitigen Schwachstromquelle stets eine gesicherte bodenseitige Starkstromversorgung eines Flugzeugs gewährleistet, ohne daß bordseitige Änderungen erforderlich sind.

Zur Lösung der gestellten Aufgabe zeichnet sich eine Flugzeug-Stromversorgungseinrichtung der im Oberbegriff von Anspruch 1 genannten Art erfindungsgemäß durch die im Kennzeichen dieses Anspruchs aufgeführten Merkmale aus. Durch bodenseitige Mehrpunktabtastung eines bordseitigen Kontaktbolzens wird sichergestellt, daß die Starkstrombeaufschlagung nur erfolgt, wenn und solange die Steckerverbindung völlig intakt ist. Beim beabsichtigten Lösen oder beim ungewollten Abfallen des Mehrfachbuchsenteils vom Mehrfachsteckerteil erfolgt sofort eine Netzabschaltung. Umgekehrt kann die Netzaufschaltung nur bewirkt werden, nachdem die Steckerverbindung hergestellt ist. Eine solche Stromversorgungseinrichtung ist bei großer Sicherheit ausgesprochen vielseitig, da alle Flugzeuge zustandsunabhängig und unter Beibehaltung der Sicherheitsmaßnahmen versorgt werden können.

Eine besonders bevorzugte Ausführungsform ergibt sich aus Anspruch 2. Hierbei erfolgt eine Zweipunktabtastung im Bereich eines der bodenseitig überbrückten Schwachstromanschlüsse, indem die entsprechende Aufnahmebuchse zwei elektrisch getrennte Kontaktglieder aufweist. Eines von zwei gegenseitig verriegelten bodenseitigen Spannungserfassungsgliedern überprüft, ob eine bordseitige Schwachstromquelle vorhanden ist; sofern dieses zutrifft, wird die bodenseitige Starkstrombeaufschlagung vorbereitet, so daß sie jederzeit manuell eingeschaltet und so lange aufrechterhalten werden kann, wie die Steckerverbindung intakt ist. Bei fehlender Bordspannung ermöglicht das weitere Spannungserfassungsglied mit der bodenseitigen Schwachstromquelle durch die Zweipunktabtastung eine bodenseitige Überprüfung des Zustandes der Steckerverbindung, wobei im einwandfreien Zustand derselben die Starkstrombeaufschlagung vorbereitet wird. Sie entfällt sofort, sobald die Steckerverbindung aufgehoben wird. Da die bordseitigen Kontaktbolzen im Bereich der Schwachstromanschlüsse üblicherweise kürzer als die anderen Kontaktbolzen ausgebildet sind und somit diese elektrischen Verbindungen am spätesten hergestellt werden bzw. am ehesten entfallen, werden Lichtbogenbildungen an den Starkstromanschlüssen sicher vermieden. Die der elektrischen Zweipunktabtastung dienenden Glieder sind dergestalt, daß sie nur wirksam werden können, wenn zunächst keine Bordspannung festgestellt wird. Diese Vorrangschaltung ist wichtig, da der Zustand de Flugzeugs beim Herstellen der Steckerverbindung normalerweise unbekannt ist.

Während gemäß Anspruch 3 die Spannungserfassungsglieder zweckmässigerweise als Relais mit entsprechenden Steuerkontakten ausgebildet sind, können hierfür auch andere Mittel verwendet werden, wie beispielsweise Thyristoren, Transistoren und dergleichen mehr. Diese Glieder müssen lediglich feststellen, ob die bord- oder bodenseitige Schwachstromquelle angeschlossen ist und somit eine intakte Steckerverbindung vorliegt, damit die Starkstrombeaufschlagung vorbereitet bzw. freigegeben werden kann.

Grundsätzlich kann die bodenseitige Schwachstromquelle beliebig ausgebildet sein. Da jedoch üblicherweise eine bordseitige Gleichstromquelle vorhanden ist, hat es sich als zweckmäßig erwiesen, auch bodenseitig eine Gleichstromquelle zu benutzen und diese so zu schalten, daß die Pluspole im Bereich der Steckerverbindung zusammenfallen. Dieses Gegeneinanderschalten dient lediglich der Sicherheit, da normalerweise nur eine der Spannungsquellen wirksam werden kann. Es ist jedoch nicht auszuschließen, daß in einem ungünstigen Falle beide Spannungsquellen aufgeschaltet werden; dieses ist beispielsweise dann der Fall, wenn zunächst die Bordspannung fehlt, wie nach dem Durchbrennen einer Sicherung, und somit die bodenseitige Zweipunktabtastung erfolgt, wonach die Bordspannung angelegt wird, wie durch Erneuern einer Sicherung oder Einlegen eines Schalters. Da das erste Spannungserfassungsglied in diesem Moment verriegelt bzw. abgeschaltet ist, kann es die nunmehr vorhandene Bordspannung nicht feststellen und die bodenseitige Zweipunktabtastung auch nicht abschalten. Sofern diese Vorgänge zusätzlich erwünscht sein sollten, müßten weitere Maßnahmen vorgesehen werden. Es hat sich aber gezeigt, daß das Gegeneinanderschalten der Gleichstromquellen eine ausreichende Sicherheit darstellt.

Mit den zweckmäßigen Merkmalen aus den Ansprüchen 5 und 6 kann gewährleistet werden, daß eine dauerhafte Starkstrombeaufschlagung nur dann möglich ist, wenn eines der beiden Spannungserfassungsglieder die bord- oder bodenseitige Schwachstromquelle erfaßt.

Das bei Auslösung dann in Selbsthaltung übergehende Leistungsrelais kann beim Auftreten eines Fehlers immer noch von Hand abgeschaltet werden.

Bei weiteren zweckmäßigen Ausführungsformen gemäß den Ansprüchen 8 und 9 kann der sich tatsächlich einstellende Betriebszustand beispielsweise optisch überwacht werden. Hierbei wird signalisiert, ob eine der Schwachstromquellen erfaßt wird und ob eine Starkstrombeaufschlagung vorliegt. Wenn es erwünscht ist, kann auch eine Unterscheidung hinsichtlich des Erfassens der bord- oder bodenseitigen Schwachstromquellen vorgesehen werden.

Gemäß Anspruch 10 ist es ferner bevorzugt, die einer Mehrfachabtastung des Kontaktbolzens dienende Aufnahmebuchse mit einer Längsteilung zu versehen. Eine andere Teilung, wie eine Querteilung, kann sinnvoll sein, wenn beispielsweise bei geringstem Lösen des entsprechenden Kontaktbolzens sofort die elektrische Verbindung aufgehoben werden soll. Da jedoch normalerweise die Kontaktbolzen im Bereich der Schwachstromanschlüsse ohnehin kürzer ausgebildet sind, genügt im allgemeinen die Längsteilung, die überdies den Vorteil einer großflächigen beidseitigen, also sicheren, Kontaktnahme hat.

In weiterer Ausgestaltung gemäß den Ansprüchen 11 und 12 sollten die Buchsenschalen, wie Halbschalen, radial elastisch spreizbar und somit durch entsprechende elastische Halteringe zusammengehalten sein. Hierdurch wird auch nach längerem Gebrauch eine sichere Kontaktnahme im Bereich der Mehrpunktabtastung gewährleistet. Gemäß Anspruch 13 kann dabei ein Längsverbindungsmittel, wie ein Verbindungsstift, dafür sorgen, daß die Buchsenschalen in Längsrichtung nicht gegeneinander verrutschen.

Die Erfindung wird nachfolgend an zeichnerisch dargestellten Ausführungsbeispielen näher erläutert. Es zeigen:

Figur 1 - die bodenseitige Stromversorgungseinrichtung in einer schematischen Übersicht,

Figur 2 - eine längsgeteilte Aufnahmebuchse des Mehrfachbuchsenteils in einem Längsschnitt und

Figur 3 - die Aufnahmebuchse aus Figur 2 in einem Querschnitt.

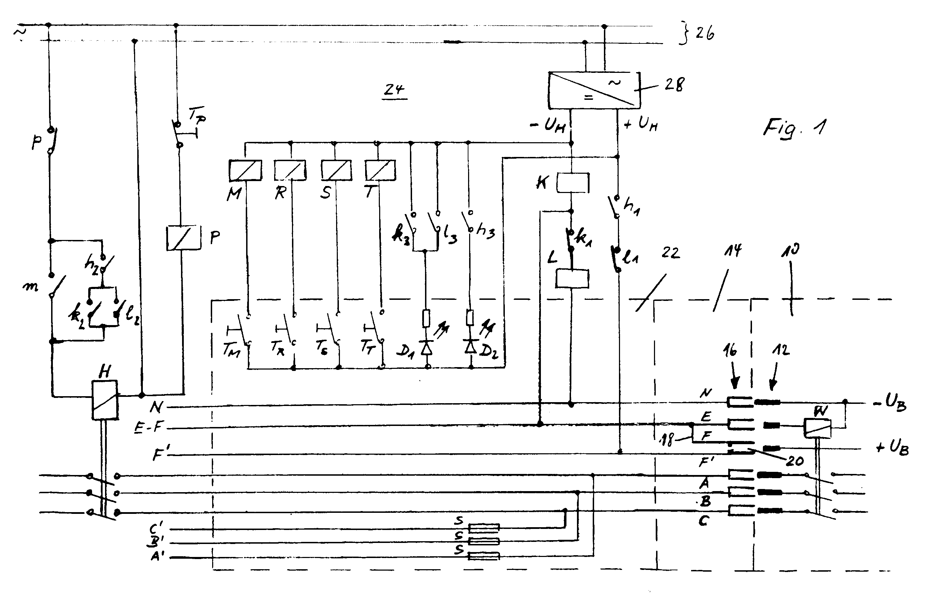

Gemäß Figur 1 weist ein bordseitiges Mehrfachsteckerteil 10 mehrere Kontaktbolzen 12 auf, die mit Aufnahmebuchsen 16 eines bodenseitigen Mehrfachbuchsenteils 14 in mechanischen und elektrischen Eingriff gebracht werden können. Das Mehrfachbuchsenteil 14 ist in nicht näher dargestellter Weise über ein Verbindungskabel mit einem Steuerteil 22 verbunden, das wiederum über ein Kabel an eine Zentrale 24 angeschlossen ist.

Die Starkstrombeaufschlagung entsprechender Aufnahmebuchsen 16 an Starkstromleitungen A, B, C kann durch Erregen eines bodenseitigen Leistungsrelais H eingeleitet werden. Ein Bordrelais W kann vorhanden sein, um den Starkstrom bordseitig durchzuschalten. Ein ebenfalls die Steckerverbindung durchlaufender gemeinsamer Nulleiter N ermöglicht es, daß verschiedene Spannungen zur Verfügung stehen. Es ist üblich, an den Starkstromleitungen A, B, C eine 400 Hz-Starkstromversorgung mit einer Spannung von 200 Volt zur Verfügung zu stellen, so daß die Spannung zwischen einer der Starkstromleitungen A, B, C und dem Nulleiter N 115 Volt beträgt.

Es ist üblich, zwei der Kontaktbolzen 12 kürzer auszubilden und mit den Aufnahmebuchsen 16 zweier Schwachstromanschlüsse E, F in Eingriff zu bringen, die bodenseitig eine Brücke 18 aufweisen.

Eine bordseitige Gleichstromquelle ist üblicherweise dergestalt, daß ihr negativer Pol $-U_B$ am Nulleiter N und ihr positiver Pol $+U_B$ am F-Anschluß liegt. Dadurch kann über die bodenseitige Schleife der Brücke 18 ein Erregen des Bordrelais W erfolgen. Gleichzeitig kann die bodenseitige Starkstrombeaufschlagung vorbereitet werden. Dieses erfolgt im vorliegenden Fall dadurch, daß bodenseitig zwischen den Anschlüssen E und N ein erstes Spannungserfassungsglied L, wie ein Relais, in Reihe zu einem im Ruhezustand geschlossenen Steuerkontakt k1 eines zweiten Spannungserfassungsglieds K, wie eines Relais, liegt. Sobald die Steckerverbindung hergestellt ist, liegt die Spannung der bordseitigen Gleichstromquelle am ersten Spannungserfassungsglied L an, das seinerseits einen Steuerkontakt l2 in der Versorgungsleitung des Leistungsrelais H schließt und somit eine dauerhafte Starkstrombeaufschlagung vorbereitet. Sobald nämlich ein Steuerkontakt m eines noch zu erläuternden Ein-Relais M geschlossen wird und das Leistungsrelais H kurzzeitig anzieht, hält es sich über seinen Steuerkontakt h2 und den erwähnten Steuerkontakt l2, solange ein Notaus-Steuerkontakt p geschlossen bleibt. Im Normalzustand ist somit eine dauerhafte Starkstrombeaufschlagung gewährleistet.

Probleme ergeben sich dann, wenn keine bordseitige Gleichstromquelle zur Verfügung steht bzw. diese nicht intakt ist. Dadurch entfallen ein Ansprechen des ersten Spannungserfassungsglieds L und die geschilderte Selbsthaltung des Leistungsrelais H. Wenn dieses wie beim Stand der Technik dennoch zwangsweise durchgeschaltet wird, ergeben sich die eingangs erläuterten Sicherheitsprobleme.

Im Rahmen der vorliegenden Erfindung ist der Schwachstromanschluß F bodenseitig geteilt und in Form einer geteilten Aufnahmebuchse 20 ausgebildet. Ein Buchsenteil ist als Anschluß F weiterhin über die Brücke 18 mit dem Anschluß E verbunden, während der andere Buchsenteil als Anschluß F' gesondert herausgeführt ist. Beide Buchsenteile kommen mit demselben Kontaktbolzen 12 in Eingriff. Der Anschluß F' ist über einen im Ruhezustand geschlossenen Steuerkontakt l1 und einen hierzu in Reihe liegenden, im Arbeitszustand des Leistungsrelais H geschlossenen Steuerkontakt h1 an den positiven Pol $+U_H$ eines bodenseitigen Gleichspannungsteils 28 angeschlossen, das primärseitig von Versorgungsleitungen 26 gespeist wird. In Anpassung an die übliche bordseitige Gleichstromquelle sollte auch das bodenseitige Gleichspannungteil 28 eine Ausgangsspannung von etwa 28 Volt haben, was jedoch nicht unbedingt erforderlich ist und lediglich der Sicherheit dient. Der negative Ausgangspol $-U_H$ des Gleichspannungsteils 28 ist an das zweite Spannungserfassungsglied K angeschlossen, das seinerseits mit dem Anschluß E und dem Steuerkontakt k1 verbunden ist. Ein zweiter Steuerkontakt k2 des zweiten Spannungserfassungsglieds K liegt im Selbsthaltekreis des Leistungsrelais H parallel zum Steuerkontakt l2.

Während das erste Spannungserfassungsglied L zum Erfassen der bordseitigen Gleichspannung dient, soll das zweite Spannungserfassungsglied K die bodenseitige Gleichspannung feststellen. Dieses erfolgt bei über den Steuerkontakt m kurzzeitig angeschaltetem Leistungsrelais H über dessen Steuerkontakt h1, ferner über den sich bei fehlender Bordspannung im Ruhezustand befindlichen Steuerkontakt l1, ferner über den Kontaktbolzen 12 im Bereich der Aufnahmebuchse 20 und über die Brücke 18. Sobald also nach Herstellung der Steckerverbindung und nach einem Tasten des Leistungsrelais H bei nicht angesprochenem ersten Spannungserfassungsglied L das zweite Spannungserfassungsglied K anspricht, werden die Anschlüsse F und F' der Aufnahmebuchse 20 ständig auf ihren durch den Kontaktbolzen 12 verursachten Kurzschluß überprüft. Während dieses Kurzschlußzustandes kann die Selbsthaltung des Leistungsrelais H aufrechterhalten bleiben. Sobald der Kurzschlußzustand entfällt, wird dieses vom Spannungserfassungsglied K festgestellt, so daß die Selbsthaltung des Leistungsrelais H unterbrochen wird.

Es besteht eine Vorrangschaltung dahingehend, daß anfänglich zuerst das Spannungserfassungsglied L prüfen kann, ob die Bordspannung vorhanden ist. Diese Vorrangschaltung wird durch den im Ruhezustand offenen Steuerkontakt h1 des Leistungsrelais H sichergestellt. Die Steuerkontakte l1 und k1 dienen einer gegenseitigen Verriegelung der Spannungserfassungsglieder L und K dahingehend, daß nicht beide Glieder gleichzeitig ansprechen können.

Die beschriebene Stromversorgungseinrichtung ist nicht für eine gleichzeitige Versorgung des Bordrelais W bestimmt oder geeignet; aus Sicherheitsgründen soll ein diesbezüglicher elektrischer Eingriff in die Bordseite vermieden werden, so daß es bei Vorhandensein eines Bordrelais W erforderlich ist, dieses in anderer Weise einzuschalten oder zu umgehen. Wichtig ist lediglich, daß bei Vorhandensein und bei Fehlen der Bordspannung die Starkstrombeaufschlagung der Aufnahmebuchsen 16 nur bei intakter Steckerverbindung möglich ist. Falls auch eine bodenseitige Versorgung des Bordrelais W erwünscht ist, müssen zusätzliche Maßnahmen vorgesehen werden.

Ein im vorliegenden Fall ebenfalls an die Versorgungsleitungen 26 angeschlossenes Notaus-Relais P kann durch einen Tastschalter $T_p$ abgeschaltet werden, so daß der Notaus-Steuerkontakt p jederzeit zu einem Abfallen des Leistungsrelais H bzw. zu einem Abschalten der Starkstrombeaufschlagung benutzt werden kann.

Im vorliegenden Fall sind an die Gleichspannungsseite des Gleichspannungsteils 28 ferner vier Relais M, R, S, T über je einen Tastschalter $T_M$, $T_R$, $T_S$, $T_T$ angeschlossen. Dabei dient das Relais M als Ein-Relais, dessen Steuerkontakt m für das Eintasten des Leistungsrelais H dient. Die weiteren Relais R, S, T dienen nicht näher dargestellten Zusatzfunktionen, wie einer Systemabschaltung und einem Auf- sowie Abwickeln einer Kabelrolle. Eine Lichtemissionsdiode D1 ist über eine Parallelschaltung von Steuerkontakten $l_3$, $k_3$ und einen Strombegrenzungswiderstand an den Ausgang des Gleichspannungsteils 28 angeschlossen, um eine Signalanzeige zu erhalten, wenn das Spannungserfassungsglied L oder K angesprochen hat; im Bedarfsfall können auch separate Anzeigeglieder für diese Spannungserfassungsglieder vorgesehen sein. Eine weitere Lichtemissionsdiode D2 ist über einen Steuerkontakt h3 des Leistungsrelais H ebenfalls an den Ausgang des Gleichspannungsteils 28 angeschlossen, so daß eine optische Anzeige des Betriebszustands des Leistungsrelais H gewährleistet ist.

Gemäß Figur 1 sind im Bereich des Steuerteils 22 Meßrückleitungen A', B', C' über Sicherungen S an die Starkstromleitungen A, B, C angeschlossen. Die Meßrückleitungen haben einen gegenüber den Starkstromleitungen sehr kleinen Querschnitt und sind mit diesen vorzugsweise in einem gemeinsamen Kabel geführt. Die Meßrückleitungen dienen dazu, die Spannungen im Starkstromübergabebereich abzunehmen und einer bodenseitigen Regeleinrichtung für die Starkstromversorgung zuzuleiten, damit stets eine gleichbleibende Übergabespannung zur Verfügung gestellt wird. Die Sicherungen S sollen verhindern, daß bei einem Kurzschluß in dem das Steuerteil 22 mit der Zentrale 24 verbindenden Kabel dieses durch Ausfallen der Meßrückleitungen insgesamt zerstört wird.

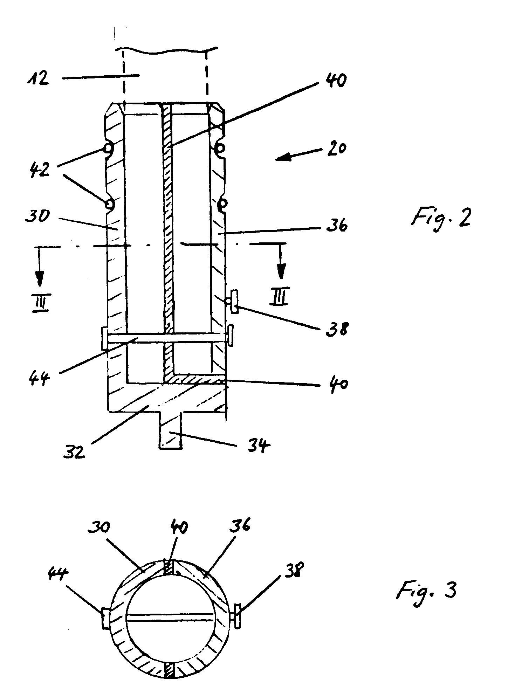

In den Figuren 2 und 3 ist eine spezielle Ausführungsform der geteilten Aufnahmebuchse 20 dargestellt. Diese ist im vorliegenden Fall längsgeteilt und hat eine Buchsenschale 30 mit einem Boden 32 sowie einem Anschluß 34, der dem Anschluß F entsprechen kann, und eine hiervon elektrisch getrennte Buchsenschale 36 mit einem Anschluß 38, der dem Anschluß F' entsprechen kann. Zwischen den als Halbschalen ausgebildeten Buchsenschalen 30, 36 befindet sich eine Isolierzwischenlage 40, die sich auch zwischen der Buchsenschale 36 und dem Boden 32 erstreckt.

Die beiden als Halbschalen ausgebildeten Buchsenschalen 30, 36 sind radial aufspreizbar, damit auch bei längerem Gebrauch das Einführen und die sichere Kontaktnahme des zugehörigen Kontaktbolzens 12 gewährleistet ist. Im vorliegenden Fall wird die elastische Spreizbarkeit der Buchsenschalen durch zwei diese umfassende elastische Halteringe 42, wie Gummiringe, gewährleistet, während ein Verbindungsstift 44 dafür sorgt, daß sich die Buchsenschalen in Längsrichtung nicht gegenseitig verschieben können.

Die Aufnahmebuchse 20 kann vielfältig anders gestaltet werden, wobei lediglich sichergestellt werden muß, daß der elektrisch leitende Kontaktbolzen 12 an getrennten Stellen abgetastet wird, also mit den Anschlüssen F und F' in elektrischen Eingriff kommt.

Hierzu kann beispielsweise auch eine Quer- oder Schrägteilung vorgesehen werden. Stattdessen ist es auch möglich, eine starre, allseitig geschlossene Aufnahmebuchse mit separaten Kontaktlamellen vorzusehen.

Die erfindungsgemäße Stromversorgungseinrichtung kann vielfältig abgewandelt werden. So ist es möglich, einen beliebigen (oder auch mehrere) Kontaktbolzen abzutasten, indem der Abtastvorgang so gewählt wird, daß dieser völlig unabhängig von der Starkstrombeaufschlagung ist. Dieses kann beispielsweise mittels einer höherfrequenten Abtastfrequenz durchgeführt werden, die galvanisch getrennt eingekoppelt wird. Auch kann statt des Anschlusses F der Anschluß E geteilt sein, ohne daß sich hieraus maßgebliche Änderungen der dargestellten Stromversorgungseinrichtung ergeben. Wichtig ist dabei stets, daß bei fehlender Bordspannung der Steckerzustand ständig vom Boden aus elektrisch überprüft wird, damit die Starkstrombeaufschlagung nur bei intaktem Zustand der Stekkerverbindung hergestellt werden kann.

**Patentansprüche**

1. Flugzeug-Stromversorgungseinrichtung mit einem bodenseitigen, mehrere Aufnahmebuchsen (16) aufweisenden Mehrfachbuchsenteil (14), das mit einem bordseitigen, mehrere Kontaktbolzen (12) aufweisenden Mehrfachsteckerteil (10) zu verbinden ist und bodenseitig versorgbare Starkstromanschlüsse (A, B, C), insbesondere Drehstromanschlüsse, sowie einen gemeinsamen Nulleiter (N) und zwei Schwachstromanschlüsse (E, F) aufweist, wobei der eine Schwachstromanschluß (F) und der Nulleiter (N) über das Mehrfachsteckerteil (10) mit den Polen einer gegebenenfalls vorhandenen bordseitigen Schwachstromquelle, wie Gleichstromquelle, verbindbar sind und der andere Schwachstromanschluß (E) bodenseitig eine Brücke (18) zu dem einen Schwachstromanschluß (F) aufweist sowie bordseitig mit einem gegebenenfalls vorhandenen, an die Schwachstromquelle angeschlossenen Steuerorgan (W) wie einem Bordrelais für die Starkstromversorgung, verbindbar ist, wobei die bodenseitige Dauerversorgung der Starkstromanschlüsse von einer intakten Steckerverbindung der Schwachstromanschlüsse abhängig ist und ein bodenseitiges Spannungserfassungsglied (L) bei intakter Steckerverbindung der Schwachstromanschlüsse (E, F) und vorhandener Bordspannung die Dauerversorgung der Starkstromanschlüsse (A, B, C) vorbereitet, dadurch gekennzeichnet, daß ein bodenseitiges Hilfsmittel (K, 28,30,36) bei fehlender Bordspannung an einer Aufnahmebuchse (20) eine elektrische Mehrpunktabtastung im Eingriffsbereich der bordseitigen Kontaktbolzen (12) durchführt und bei elektrischem Kurzschluß zwischen den Abtaststell nach Herstellung der Steckerverbindung die Dauerversorgung der Starkstromanschlüsse (A, B, C) vorbereitet und daß das Spannungserfassungsglied (L) beim Ansprechen das bodenseitige Hilfsmittel verriegelt und dieses beim Ansprechen das Spannungserfassungsglied verriegelt.

2. Einrichtung nach Anspruch 1,
**dadurch gekennzeichnet,**
daß einer der bodenseitig überbrückten Schwachstromanschlüsse (F) zwei elektrisch getrennte, mit dem zugehörigen Kontaktbolzen (12) des Mehrfachsteckerteils (10) an unterschiedlichen Bereichen in elektrischen Eingriff tretende Kontaktglieder (30, 36; F, F') seiner Aufnahmebuchse (20) aufweist, von denen eines (30; F) über die Brücke (18; EF) mit dem weiteren Schwachstromanschluß (E) verbunden ist, daß an die Brücke (18; EF) und den Nulleiter (N) über einen ersten Schaltkontakt (k1) das Spannungserfassungsglied (L) angeschlossen ist, das während des Erfassens der bordseitigen Niederspannung ($U_B$) die Dauerversorgung der Starkstromanschlüsse (A, B, C) zuläßt und sonst unterbricht, daß an die Brücke (18; EF) und das hiervon elektrisch trennbare Kontaktglied (36; F') über einen zweiten Schaltkontakt (l1) ein in Reihe zu einer bodenseitigen Schwachstromquelle (28) geschaltetes zweites Spannungserfassungsglied (K) angeschlossen ist, das während des Erfassens der bodenseitigen Niederspannung ($U_H$) über die durch den bordseitigen Kontaktbolzen (12) überbrückten Kontaktglieder (30, 36; F, F') die Dauerversorgung der Starkstromanschlüsse (A, B, C) zuläßt und sonst unterbricht, daß die beim Ansprechen des jeweils zugehörigen Spannungserfassungsglieds (L, K) öffnenden Schaltkontakte (l1,k1) den Stromkreis des anderen Spannungserfassungsglieds (K, L) unterbrechen und daß im Stromkreis des zweiten Spannungserfassungsglieds (K) ein erst bei Strombeaufschlagung der Starkstromanschlüsse (A, B, C) geschlossener dritter Schalter (h1) liegt.

3. Einrichtung nach Anspruch 2,
**dadurch gekennzeichnet,**
daß die Spannungserfassungsglieder (L, K) als elektromagnetische Relais und die ersten sowie zweiten Schalter (l1, k1) als deren Relaissteuerkontakte ausgebildet sind.

4. Einrichtung nach einem der Ansprüche 2 oder 3,
**dadurch gekennzeichnet,**
daß der positive Pol (+ $U_H$), der als Gleichstromquelle ausgebildeten bodenseitigen Schwachstromquelle (28) über die zweiten und dritten Schaltkontakte (1), h1) mit dem von der Brücke (18; EF) elektrisch trennbaren Kontaktglied (36; F') verbindbar ist, an dem der positive Pol (+ $U_B$) einer als Gleichstromquelle ausgebildeten bordseitigen Schwachstromquelle anliegen kann, und daß der negative Pol (-$U_H$) der bodenseitigen Schwachstromquelle (28) an das zweite Spannungserfassungsglied (K) angeschlossen ist, das mit seinem anderen Anschluß einerseits mit der Brücke (18; EF) verbunden und andererseits über den ersten Schaltkontakt (k1) sowie das erste Spannungserfassungsglied (L) mit dem Nulleiter (N) verbindbar ist, an dem der negative Pol (-$U_B$) der bordseitigen Schwachstromquelle (28) anliegen kann.

5.  Einrichtung nach einem der Ansprüche 2 bis 4, **dadurch gekennzeichnet,** daß ein bodenseitiges Leistungsrelais (H) für die Stromversorgung der Starkstromanschlüsse (A, B, C) mit einer Stromversorgungsquelle (26) über einen Ein-Schalter (m) verbindbar ist, dem ein im Ruhezustand offener Steuerkontakt (h2) des Starkstromrelais (H) und in Reihe hierzu eine Parallelschaltung von im Ruhezustand offenen Steuerkontakten (k2, l2) der beiden Spannungserfassungsglieder (K, L) parallelgeschaltet sind.

6.  Einrichtung nach Anspruch 5, **gekenzeichnet durch** einen Notaus-Schalter (p) in Reihe zu dem Leistungsrelais (H) und der Parallelschaltung mit dem Ein-Schalter (m).

7.  Einrichtung nach einem der Ansprüche 2 bis 6, **dadurch gekennzeichnet,** daß der dritte Schaltkontakt (h1) ein im Ruhezustand offener Steuerkontakt des Leistungsrelais (H) ist.

8.  Einrichtung nach einem der Ansprüche 2 bis 7, **gekennzeichnet durch** ein über einen im Ruhezustand des Leistungsrelais (H) offenen Steuerkontakt (h3) an Spannung, wie an die bodenseitige Schwachstromquelle (28), anschließbares Anzeigeglied (D2), wie eine Lichtemissionsdiode, für die Starkstromversorgung.

9.  Einrichtung nach einem der Ansprüche 2 bis 8, **gekennzeichnet durch** ein über eine Parallelschaltung von im Ruhezustand offenen Steuerkontakten (k3, l3) der Spannungserfassungsglieder (L, K) an Spannung, wie an die bodenseitige Schwachstromquelle (28) anschließbares Anzeigeglied (D1), wie eine Lichtemissionsdiode.

10. Einrichtung nach einem der Ansprüche 2 bis 9, **dadurch gekennzeichnet,** daß die Aufnahmebuchse (20) mit den beiden Kontaktgliedern (wie F, F') eine mechanische und elektrische Längsteilung aufweist.

11. Einrichtung nach Anspruch 10, **dadurch gekennzeichnet,** daß die Aufnahmebuchse (20) zwei radial elastisch spreizbare Buchsenschalen (30, 36), wie Halbschalen mit einer Isolierzwischenlage (40) aufweist.

12. Einrichtung nach Anspruch 11, **gekennzeichnet durch** die Buchsenschalen (30, 36) umfassende elastische Halteringe (42), wie Gummibänder.

13. Einrichtung nach Anspruch 11 oder 12, **gekennzeichnet durch** ein die Halbschalen (30, 36) in Längsrichtung verbindendes Mittel, wie einen Verbindungsstift (44).

**Claims**

1.  Aircraft current power supply device consisting of a ground multiway socket outlet (14) on the bottom featuring several receptacles (16) wich can be connected to an on-board multiple plug (10) featuring several studs (12); said device having heavy-current, specifically three-phase connectors (A,B,C) supplied from the ground, as well as a common neutral conductor (N) and two weak-current contacts (E, F); one of side weak-current contacts (F) and the neutral conductor (N) can be connected using the multiple plug (10) to the poles of any existing on-board weak i.e. direct-current power source; said other weak current contact (E) acts as a bridge (18) to the ground and any existing control unit (W) integrated into the on-board weak-current circuit such as an on-board relay for heavy-power supply; a continuous supply of heavy power to the heavy-power contacts is dependent on the weak-power circuit being closed at the plug-and-socket connectors, once the weak-power circuit is closed at the plug-and-socket contacts (E, F) and there is on-board power, a voltage registration unit (L) initiates a continuous supply to the heavy-power connectors (A, B, C); **wherein** if the on-board circuit is dead at one socket (20), an auxiliary unit (K, 28, 30,36) carries out an electrical multipoint scan of the on-board contact studs (12) and, if putting the plug in results in a short circuit between the points being scanned, it initiates a continuous supply of power to the heavy-power connectors (A, B, C) and the voltage registration unit (L) responds by interlocking the ground auxiliary unit and this responds by interlocking the voltage registration unit.

2.  Device according to claim 1, **wherein** one of the weak-current connectors (F), bridged on the ground, consists of two electrically separated elements (30, 36; F, F') in its receptical (20) contacting their opposing contact studs (12) in the multiple plug unit (10) at distinct points; one of said electrical elements (30; F) is connected by the bridge (18; EF) to the other weak-power connector (E); said voltage registration means (L) is connected to the bridge and the neutral conductor (N) by means of a primary switch contact (k1), which permits a continuous supply of power to the heavy-power connectors (A, B, C) only while on board low voltage ($U_B$) is being registered and otherwise interrupts it; a second voltage registration means (K), connected in series to a weak power source (28) on the ground, is wired to the bridge (18, EF) and the contact (36; F) electrically seperable from the first by a second switch (L1), permitting a continuous power supply to the heavy-power connectors (A, B, C) only while low voltage ($U_H$) is being registered on the ground through the contact elements (30,36; F, F') bridged by the on-board contact studs (12), otherwise the power supply is cut-off; tie opening of the switch contacts (L1, k1) integrated into one ot the responding voltage registration devices (L, K) interrupts the circuit of the other voltage registration means while in the circuit containing the second voltage registration means (K) there is a third switch (h1) which does not close until the heavy power connectors (A, B, C) are live.

3. Device according to claim 2,
**wherein**
the voltage registration means (L, K) are electro-magnetic relays and the first and second switches (L1, k1) are designed as their relay controle contacts.

4. Device according to any of the claims 2 or 3,
**wherein**
the positive pole (+ $U_H$) of the weak-power ground source (28) of direct current can be connected to the contact element (36; F'), which can be electrically disconnected from the bridge (18, EF), by the second and third switch contacts (L1, h1), the positive pole (+ $U_B$) of an on-board, weak-power source of direct current can be hooked up to said contact element; the negative pole (-$U_H$) of the on-board weak current source (28) is connected to the second voltage registration means (K) that with its other connector is connected to the bridge (18; EF) and can also be connected through the first switch contact and the first voltage registration unit (L) to the neutral conductor (N) to which the negative pole (-$U_B$) of the on-board- weak-current source (28) can be connected.

5. Device according to any of the claims 2 to 4,
**wherein**
a power relay (H) on thee ground for supplying power to the heavy-power connectors (A, B, C) can be connected to an on switch (m) by means of a power supply source (26) which to said on switch a controle contact (h2), open in its rest state, of the heavy-power relay (H) and, in series with this, a parallel circuit of controle contacts (k2, L2), open in rest state, of both the voltage registration means (K, L), are connected in parallel.

6. Device according to claim 5,
**wherein**
an emergency-off switch (h) is in series to the power relay (H) and the parallel circuit with the on switch (m).

7. Device according to any of the claims 2 to 6,
**wherein**
the third switch contact (h1) is a controle contact, open in rest state, of the power relay (H).

8. Device according to any of the claims 2 to 7,
**wherein**
an indicator (D2) as a light-emitting diode, for the supply of heavy-power can be connected to voltage as the weak-power source (28) on the ground, by the controle contact (h3) which is open when the power relay (H) is in rest state.

9. Device according to any of the claims 2 to 8,
**wherein**
an indicator (D1) as light-emitting diode can be connected to voltage as to the weak-power source (28) on the ground using a parallel circuit of controle contacts (k3, L3) of tile voltage registration devices (L, K) open in rest state.

10. Device according to any of the claims 2 to 9,
**wherein**
the two contact elements (as F, F') in the receptical (29) are mechanically and electrically separated by a longitudinal divide.

11. Device according to claim 10,
**wherein**
the receptical (20) has two radially elastic socket cups (30, 36) which can be spread apart, consisiting of half-sections including a layer of insulation (40).

12. Device according to claim 11,
**wherein**
the elastic ring grips (42) around the socket cups (30, 36) are elastic bands.

13. Device according to claim 11 or 12,
    **wherein**
    the half-sections (30, 36) are hold together in their longitudinal direction, by means as a connecting pin (44).

## Revendications

1. Dispositif d'alimentation en courant d'un avion avec un élément à prises multiples (14), prévu au sol, présentant plusieurs douilles (16), élément qui doit être relié, à bord, à un élément à connecteurs multiples (10) présentant plusieurs broches de contact (12) et qui présente, au sol, des raccords alimentables pour courant fort (A, B, C), notamment des raccords pour courant triphasé, ainsi qu'un conducteur neutre commun (N) et deux raccords pour courant basse tension (E, F), l'un des raccords pour courant basse tension (F) et le conducteur neutre (F) étant connectables, au moyen de l'élément à connecteurs multiples (10), avec les pôles d'une source de courant basse tension, telle qu'une source de courant continu, éventuellement présente à bord et l'autre raccord pour courant basse tension (E) présentant, au sol, un pont (18) destiné au raccord pour courant basse tension (F) et étant connectable, à bord, avec un organe de commande (W), tel qu'un relais de bord pour l'alimentation en courant fort, éventuellement présent et relié à la source de courant basse tension, l'alimentation continue, côté sol, des raccords de courant fort, étant dépendante de l'état de la connexion des raccords pour courant basse tension, et un élément détecteur de tension (L), prévu au sol, préparant, la connexion des raccords pour courant basse tension (E, F) étant intacte et la tension de bord étant présente, l'alimentation continue des raccords pour courant fort (A, B, C), caractérisé en ce qu'un moyen auxiliaire (K, 28, 30, 36), prévu au sol, effectue sur une douille (20), lorsque la tension de bord fait défaut, une exploration multipoints dans la partie où les broches de contact (12), prévues à bord, se trouvent engagées, et prépare après connexion, en cas de court-circuit électrique entre les points d'exploration, l'alimentation continue des raccords pour courant fort (A, B, C) et en ce que l'élément détecteur de tension (L) verrouille, en cas d'activation, l'outil auxiliaire prévu au sol et en ce que celui-ci verrouille, en cas d'activation, l'élément détecteur de tension.

2. Dispositif suivant la revendication n° 1,
   **caractérisé en ce que**
   l'un des raccords pour courant basse tension (F), pontés au sol, présente deux éléments de contact (30, 36; F, F') de sa douille (20), isolés électriquement et en contact électrique, en diverses parties, avec la broche de contact correspondante (12), éléments dont l'un (30; F) est relié, via le pont (18; EF), avec l'autre raccord pour courant basse tension (E), en ce que l'élément détecteur de tension (L) est raccordé au pont (18; EF) et au conducteur neutre (N), via un premier contact de commutation (k1), contact qui, durant la détection de la basse tension ($U_B$) présente à bord, admet ou interrompt l'alimentation continue des raccords pour courant fort (A, B, C), en ce qu'un deuxième élément détecteur de tension (K), connecté en série à une source de courant basse tension (28) prévue au sol, est relié, via un deuxième contact de commutation (L1), au pont (18; EF) et à l'élément de contact (36; F') isolable électriquement, élément qui, durant la détection de la basse tension ($U_H$), admet ou interrompt l'alimentation continue des raccords pour courant fort (A, B, C), via les éléments de contact (30, 36; F, F') pontés par la broche de contact (12) prévue à bord, en ce que, lors de l'activation de l'élément détecteur de tension correspondant (L, K), les contacts de commutation (L1, K1) assurant une ouverture interrompent le circuit de courant de l'autre élément détecteur de tension et en ce que se trouve, dans le circuit de courant du deuxième élément détecteur de tension (K), un troisième commutateur (h1) qui ne se ferme que lorsque les raccords pour courant fort (A, B, C) sont alimentés en courant.

3. Dispositif suivant la revendication n° 2,
   **caractérisé en ce que**
   les éléments détecteurs de tension (L, K) sont conçus sous forme de relais électromagnétiques, leur premier et deuxième commutateur (l1, k1) leur servant de contacts de commande par relais.

4. Dispositif suivant l'une des revendications n° 2 ou 3,
   **caractérisé en ce que**
   le pôle positif (+ $U_H$) de la source de courant fort (28) conçue au sol sous forme de source de courant continu, est connectable, via le deuxième et le troisième contact (L1, h1), avec l'élément de contact (36; F') isolable électriquement du pont (18; EF), élément auquel peut être appliqué le pôle positif (+ $U_B$) d'une source de courant basse tension conçue à bord sous forme de source de courant continu, et en ce que le pôle négatif (- $U_H$) de la source de courant basse tension (28), prévue au sol, est raccordée au deuxième élément détecteur de tension (K), lequel, d'une part, est connecté au pont (18; EF) et, d'autre part, est connectable au conducteur neutre (N), via le premier contact de commutation (k1) et le premier élément détecteur de tension (L), conducteur auquel peut être appliqué le pôle négatif (- $U_B$) de la source de courant basse pression (28) prévue à bord.

5. Dispositif suivant l'une des revendications n° 2 à 4,
   **caractérisé en ce qu'**
   un relais de puissance (H), prévu au sol, peut être connecté, pour l'alimentation en courant des raccords pour courant fort (A, B, C), à une source d'alimentation en courant (26) via un commutateur (m), auquel est connecté en parallèle un contact de commande (h2), ouvert en position de repos, du relais de courant fort (H) et, en série, un montage en parallèle de de contacts de commande (k2, L2), ouverts en position de repos, des deux éléments détecteurs de tension (K, L).

6. Dispositif suivant la revendication n° 5,
   **caractérisé par**
   un interrupteur d'urgence (p) connecté en série au relais de puissance (H) et au montage en parallèle avec le commutateur (m).

7. Dispositif suivant l'une des revendications n° 2 à 6,
   **caractérisé en ce que**
   le troisième contact de commutation (h1) est un contact de commande, ouvert en position de repos, du relais de puissance (H).

8. Dispositif suivant l'une des revendications n° 2 à 7,
   **caractérisé par**
   un élément d'affichage (D2), tel qu'une diode d'émission de lumière, pour l'alimentation en courant basse pression, pouvant être mis, au moyen d'un contact de commande (h3), ouvert en position de repos, du relais de puissance (H), sous une tension telle que celle provenant d'une source de courant basse tension (28) prévue au sol.

9. Dispositif suivant l'une des revendications n° 2 à 8,
   **caractérisé par**
   un élément d'affichage (D1), tel qu'une diode d'émission de lumière, pouvant être mis, au moyen d'un montage en parallèle de contacts de commande (k3, l3), ouverts en position de repos, des éléments détecteurs de tension (L, K), sous une tension telle que celle provenant d'une source de courant basse tension (28) prévue au sol.

10. Dispositif suivant l'une des revendications n° 2 à 9,
    **caractérisé en ce que**
    la douille (20) présente, avec les deux éléments de contact (comme F, F') une séparation longitudinale mécanique et électrique.

11. Dispositif suivant la revendication n° 10,
    **caractérisé en ce que**
    la douille (20) présente des coques (30, 36) à écartement élastique radial, telles que des demi-coques avec couche intermédiaire isolante (40).

12. Dispositif suivant la revendication n° 11,
    **caractérisé par**
    les bagues de maintien élastiques (42), tels que des rubans caoutchoutés, qui enserrent les coques de douille (30, 36).

13. Dispositif suivant l'une des revendications n° 11 ou 12,
    **caractérisé par**
    un élément, tel qu'une goupille de jonction (44), reliant les demi-coques (30, 36) dans le sens longitudinal.

Fig. 1

EP 0 203 410 B1

Fig. 2

Fig. 3